# EUROPÄISCHE PATENTANMELDUNG

(11) **EP 1 970 980 A1**
(43) Veröffentlichungstag der Anmeldung: **17.09.2008**
(21) Anmeldenummer: 08102096.8
(22) Anmeldetag: 28.02.2008
(51) Int. Cl.: H01M 2/02

(54) **Spannungsquelle mit einem beschichteten Gehäuse**

(30) Priorität: 05.03.2007 DE 102007010602
(71) Anmelder: Siemens Audiologische Technik GmbH, 91058 Erlangen (DE)
(72) Erfinder: Gebert, Anton, 91077, Kleinsendelbach (DE); Husung, Kunibert, 91052, Erlangen (DE)
(74) Vertreter: Maier, Daniel Oliver

(57) **Zusammenfassung**

Bei einer Spannungsquelle (1) mit einem Gehäuse (2, 3, 4) zur Spannungsversorgung eines am oder im menschlichen Körper tragbaren medizinischen Gerätes soll die durch äußere Umwelteinflüsse oder Verschmutzung bedingte Ausfallrate reduziert werden. Hierzu ist vorgesehen, die Außenseite des Gehäuses (2, 3, 4) der Spannungsquelle (1) mit einer hydrophoben und/oder oleophoben und/ oder Biofilm hemmenden Beschichtung (5) zu versehen. Durch die feuchtigkeits- und schmutzabweisende Beschichtung (5) ist die Spannungsquelle (1) weitgehend vor äußeren Umwelteinflüssen und Verschmutzung geschützt.
Durch äußere Umwelteinflüsse oder Verschmutzung bedingte Ausfälle werden dadurch weitgehend vermieden.

## Beschreibung

Die Erfindung betrifft eine Spannungsquelle mit einem Gehäuse zur Spannungsversorgung eines am oder im menschlichen Körper tragbaren medizinischen Gerätes.

Zum Betrieb am oder im menschlichen Körper tragbarer medizinischer Geräte, wie beispielsweise Hörhilfegeräte, Herzschrittmacher, Geräte zur Verabreichung von Medikamenten oder diagnostische Aufzeichnungsgeräte, werden in der Regel Spannungsquellen in Form von Batterien oder wiederaufladbaren Akkumulatoren verwendet.

Da zum Betrieb der verwendeten Spannungsquellen mitunter ein Gasaustausch erforderlich ist und bei einer entleerten oder verbrauchten Spannungsquelle ggf. auch ein Austausch durch den Benutzer möglich sein muss, ist eine vollständige Kapselung der in einem medizinischen Gerät verwendeten Spannungsquelle in der Regel nicht möglich. Daher sind die verwendeten Spannungsquellen bei einem am oder im Körper getragenen medizinischen Gerät extremen äußeren Einflüssen ausgesetzt. Auf die Spannungsquellen wirken vor allem Feuchtigkeit, Fette oder Alkohole (bei der Reinigung) ein. Bei der Verwendung in Hörhilfegeräten sind die Spannungsquellen vor allem gasförmigen, flüssigen oder festen Cerumenanteilen ausgesetzt, aber auch Feuchtigkeit und Schweiß können auf die Oberfläche einer betreffenden Spannungsquelle einwirken.

Ein besonderes Problem entsteht bei der Verwendung wiederaufladbarer Batterien (Akkumulatoren), die insbesondere auch beim Laden in dem betreffenden medizinischen Gerät verbleiben und daher über einen längeren Zeitraum, beispielsweise über mehrere Jahre, nicht ausgewechselt werden. Dadurch sind sie extremer Schmutzeinwirkung ausgesetzt. Dies führt häufig zu einer Beschädigung und mitunter sogar zum vollständigen Ausfall der verwendeten Spannungsquelle.

Aus der Druckschrift US 2006/0093917 A1 ist die Verwendung einer wiederaufladbaren Lithium-Ionen-Batterie zur Verwendung bei einem im oder am Körper eines Benutzers tragbaren medizinischen Gerät bekannt.

Ferner beschreibt die Druckschrift DE 102 19 679 A1 ein Hörgerät oder Hörgeräteteile zum Einsatz in den Gehörgang und/oder die Ohrmuschel eines Trägers. Das Hörgerät oder das Hörgeräteteil ist mit einer Biofilm hemmenden Beschichtung versehen. Damit soll verhindert werden, dass sich auf dem Hörgerät bzw. dem Hörgeräteteil ein Belag aus Cerumen bildet.

Aufgabe der vorliegenden Erfindung ist es, einen durch äußere Umwelteinflüsse hervorgerufenen Ausfall der in einem medizinischen Gerät verwendeten Spannungsquelle zu verhindern.

Erfindungsgemäß wird diese Aufgabe gelöst durch eine Spannungsquelle mit einem Gehäuse zur Spannungsversorgung eines am oder im menschlichen Körper tragbaren medizinischen Gerätes, wobei die Außenseite des Gehäuses der Spannungsquelle eine hydrophobe und/oder oleophobe und/oder Biofilm hemmende Beschichtung aufweist.

In vorteilhafter Weise lagert sich bei einer Spannungsquelle gemäß der Erfindung kaum noch Schmutz an der Außenseite des Gehäuses der betreffenden Spannungsquelle an. Ferner wird durch die Beschichtung ein Anhaften des Schmutzes verhindert, so dass Schmutzpartikel, die auf die Oberfläche der Spannungsquelle gelangen, durch die Bewegung des medizinischen Gerätes häufig von selbst wieder von der Oberfläche abfallen. Darüber hinaus ist eine einfache Reinigung der betreffenden Spannungsquelle möglich, beispielsweise durch Ausblasen des medizinischen Gerätes oder durch eine Herausnahme der Spannungsquelle aus dem Gerät und anschließendes Abwischen. Insbesondere verhindert die Beschichtung, dass die Gehäuse-Oberfläche der Spannungsquelle durch Verunreinigungen und Feuchtigkeit angegriffen und beschädigt wird, was sonst auch zu Problemen bei der elektrischen Kontaktierung der betreffenden Spannungsquelle führen kann.

Durch die Erfindung kann die Lebensdauer der bei einem im oder am menschlichen Körper tragbaren medizinischen Geräte verwendeten Spannungsquelle erheblich verlängert werden. Durch die Verwendung einer Biofilm hemmenden, insbesondere bakteriziden oder fungiziden Beschichtung wird verhindert, dass sich Krankheitserreger an der Oberfläche der Spannungsquelle vermehren, die sogar zu einer Gesundheitsgefährdung des Benutzers führen könnten.

Die Beschichtung ist vorzugsweise mit chemischer Nanotechnologie hergestellt und weist hydrophobe oder oleophobe Eigenschaften auf. Dies hat den Vorteil, dass die äußeren Abmessungen der Spannungsquelle durch die Beschichtung nicht wesentlich verändert werden. Darüber hinaus kann die Beschichtung an den Kontaktstellen zur elektrischen Kontaktierung einer betreffenden Spannungsquelle ggf. leicht entfernt werden, beispielsweise durch mechanisches Abschaben der Beschichtung im Bereich der betreffenden Kontaktstellen.

Biofilm hemmende, insbesondere antibakterielle Eigenschaften der Beschichtung können insbesondere durch Einlagerung von Silberionen in die Beschichtung erreicht werden.

Vorzugsweise wird die Spannungsquelle am Ende des Herstellungsprozesses vollständig mit einer Beschichtung überzogen. Kontaktflächen zur elektrischen Kontaktierung der Spannungsquellen werden dann ggf. nachträglich von der Beschichtung befreit.

Weiterhin ist es möglich, dass verhältnismäßig kleine Teilbereiche des Gehäuses der Spannungsquelle nicht mit der Beschichtung überzogen werden, wobei frei bleibende Bereiche zur elektrischen Kontaktierung der Spannungsquelle verwendet werden.

Darüber hinaus ist es möglich, dass unterschiedliche Bereiche der Spannungsquelle mit unterschiedlichen Beschichtungen, die insbesondere unterschiedliche elektrische Eigenschaften aufweisen, überzogen werden. So kann für Teilbereiche der Oberfläche der Spannungsquelle, die zur elektrischen Kontaktierung dienen, eine elektrisch leitende Beschichtung verwendet werden. Die übrigen Gehäusebereiche werden hingegen mit einer elektrisch isolierenden Beschichtung versehen.

Bei einer weiteren Ausführungsform der Erfindung werden lediglich die aus Metall bestehenden Teilbereiche des Gehäuses der Spannungsquelle mit der Beschichtung überzogen und der Isolator zwischen diesen metallenen Bereichen, der nur einen sehr geringen Anteil der Gehäuse-Oberfläche einnimmt, weist keine entsprechende Beschichtung auf. Dies kann beispielsweise dadurch erreicht werden, dass die verwendete Beschichtung nicht an dem Isolator-Material haftet. Bei dieser Ausführungsform kann die Beschichtung elektrisch leitend ausgeführt werden und ein teilweises Entfernen der Beschichtung zur elektrischen Kontaktierung der Spannungsquelle erübrigt sich.

Bei einer anderen Ausführungsform der Erfindung werden die Materialeigenschaften und insbesondere die Härte der Beschichtung so gewählt, dass mit verhältnismäßig spitzen Enden ausgeführte Kontakte des medizinischen Gerätes die isolierende Beschichtung der Spannungsquelle durchdringen und dadurch die elektrischen Kontakte herstellen.

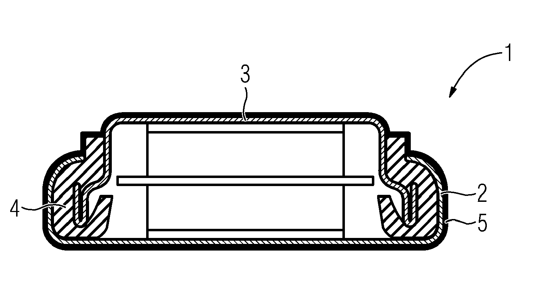

Die Erfindung wird nachfolgend anhand eines Ausführungsbeispiels beschrieben. Darin zeigt die Figur eine als Batterie oder wiederaufladbarer Akkumulator ausgebildete Spannungsquelle 1. Das Gehäuse der Spannungsquelle 1 gliedert sich im Wesentlichen in drei Teilbereiche. Es sind dies der aus einem Metall oder einer Metall-Legierung bestehende Pluspol 2, der ebenfalls aus einem Metall oder einer Metall-Legierung bestehende Minuspol 3 und der den Pluspol 2 von dem Minuspol 3 trennende Isolator 4.

Im Ausführungsbeispiel ist die Außenseite der Spannungsquelle 1 vollständig mit einer hydrophoben, oleophoben und antibakteriell wirkenden Beschichtung 5 versehen, die Vorteilhaft nach bekannten Verfahren der chemischen Nanotechnologie hergestellt ist. Dadurch ist die Spannungsquelle 1 weitgehend vor Feuchtigkeit und Verschmutzung geschützt.

Damit die Beschichtung nicht zu einer Selbstentladung der Spannungsquelle 1 führt, ist die Beschichtung als elektrischer Isolator, dass heißt nicht leitend, ausgebildet. Zur Kontaktierung der Spannungsquelle in einem medizinischen Gerät muss entweder die Beschichtung im Bereich der Kontaktstellen zur elektrischen Kontaktierung des medizinischen Gerätes entfernt werden. Alternativ können die Kontakte an dem medizinischen Gerät auch derart spitz oder scharfkantig ausgebildet sein, dass die Kontakt-Enden die Beschichtung 5 zur Kontaktierung durchdringen.

Durch die Beschichtung bleibt die Spannungsquelle 1, auch bei einer längeren Verweildauer in dem medizinischen Gerät, vor äußeren Umwelteinflüssen, insbesondere Feuchtigkeit oder Verschmutzung geschützt. Dadurch können vor allem bei innerhalb des jeweiligen medizinischen Gerätes aufladbaren Akkumulatoren, die verhältnismäßig selten ausgetauscht werden müssen, die Ausfallrate deutlich reduziert werden.

Vorteilhaft weist die Beschichtung 2 neben hydrophoben und oleophoben Eigenschaften auch Biofilm hemmende Eigenschaften auf, wodurch z.B. die Vermehrung von Bakterien auf der Oberfläche der Spannungsquelle 1 verhindert wird.

## Patentansprüche

1. Spannungsquelle mit einem Gehäuse zur Spannungsversorgung eines am oder im menschlichen Körper tragbaren medizinischen Gerätes,
**dadurch gekennzeichnet, dass** die Außenseite des Gehäuses der Spannungsquelle eine hydrophobe und/oder oleophobe und/oder Biofilm hemmende Beschichtung aufweist.

2. Spannungsquelle nach Anspruch 1, wobei die Beschichtung unter Anwendung chemischer Nanotechnologie hergestellt ist.

3. Spannungsquelle nach Anspruch 1 oder 2, wobei die Außenseite des Gehäuses vollständig mit der Beschichtung überzogen ist.

4. Spannungsquelle nach einem der Ansprüche 1 bis 3, wobei Teilbereiche der Außenseite des Gehäuses mit unterschiedlichen Beschichtungen versehen sind.

5. Spannungsquelle nach Anspruch 4, wobei die unterschiedlichen Beschichtungen unterschiedliche elektrische Eigenschaften aufweisen.

6. Spannungsquelle nach einem der Ansprüche 1 bis 5, wobei in die Beschichtung Silberionen eingelagert sind.

7. Spannungsquelle nach einem der Ansprüche 1 bis 6, ausgebildet als Batterie.

8. Spannungsquelle nach einem der Ansprüche 1 bis 6, ausgebildet als wiederaufladbarer Akkumulator.

9. Verwendung einer Spannungsquelle nach einem der Ansprüche 1 bis 8 in einem Hörhilfegerät.
